# EUROPÄISCHE PATENTSCHRIFT

(11) **EP 3 054 060 B1**
(45) Veröffentlichungstag und Bekanntmachung des Hinweises auf die Patenterteilung: **28.11.2018**
(21) Anmeldenummer: 15003686.1
(22) Anmeldetag: 29.12.2015
(51) Int. Cl.: E03C 1/084

(54) **SANITÄRES AUSLAUFELEMENT**
SANITARY OUTLET ELEMENT
ÉLEMENT DE SORTIE SANITAIRE

(30) Priorität: 03.02.2015 DE 202015000856 U
(43) Veröffentlichungstag der Anmeldung: 10.08.2016
(60) Teilanmeldung: 17000262.0
(73) Patentinhaber: Neoperl GmbH, 79379 Müllheim (DE)
(72) Erfinder: Stein, Alexander, 79241 Ihringen (DE)
(74) Vertreter: Börjes-Pestalozza, Henrich

(56) Entgegenhaltungen:
- EP-A1- 2 762 234
- WO-A1-2012/156435
- DE-U1-202010 016 867
- US-A- 5 348 231
- US-A1- 2013 175 366

## Beschreibung

Die Erfindung betrifft ein sanitäres Auslaufelement, das mit seinem Einsetzgehäuse in den Wasserauslauf einer sanitären Auslaufarmatur einsetzbar ist und einen Strahlregler zum Formen des austretenden Wasserstrahls hat, der einen Strahlzerleger aufweist und dem zuströmseitig ein Durchflussmengenregler oder eine Durchflussdrossel vorgeschaltet ist, welche/welcher die pro Zeiteinheit durchströmende Wassermenge auf einen festgelegten Wert einregelt oder begrenzt und ein Drossel- oder Reglergehäuse hat, das im Einsetzgehäuse verschiebblichgeführt und von einer Offenstellung, in der das Drossel- oder Reglergehäuse zumindest von einer Teilmenge des Wassers umspült wird, gegen die Rückstellkraft zumindest eines Rückstellelements in eine Schließstellung bewegbar ist, in der das zum Strahlregler strömende Wasser den Durchflussmengenregler oder die Durchflussdrossel durchströmt, wobei der Durchflussmengenregler oder die Durchflussdrossel mit seinem/ihremDrossel- oder Reglergehäuse in der Schließstellung derart auf einem Auflager aufliegt, dass eine Auflageröffnung verschlossen wird.

Sanitäre Auslaufelemente, die in einer Wasserleitung angeordnet sind, sind bereits in den verschiedensten Ausführungen bekannt. So hat man bereits Strahlregler geschaffen, die in den Wasserauslauf einer sanitären Auslaufarmatur einsetzbar sind. Die vorbekannten Strahlregler, die entweder unmittelbar im Wasserauslauf einer sanitären Auslaufarmatur befestigt oder in ein am Wasserauslauf montierbares: Auslaufmundstück eingesetzt werden können, weisen regelmäßig einen Strahlzerleger auf, welcher den durch die Rohrleitung und den Armaturenkörper zufließenden Wasserstrom in eine Vielzahl von Einzelstrahlen unterteilt. Diese Einzelstrahlen können je nach Strahlregler-Ausführung bei Bedarf belüftet werden, bevor in einer dem Strahlzerleger nachfolgenden Homogenisiereinrichtung und/ oder einem :abströmseitigen Strömungsgleichrichter, die eine netz-, gitter-, sieb- oder wabenartige Struktur haben, ein homogener, weicher und nicht-spritzender Wasserstrahl am Wasserauslauf geformt wird.

Damit der Strahlregler seine Funktion optimal erfüllen und den aus dem Wasserauslauf austretenden Wasserstrahl formen kann, ist eine gewisse,durch den Strahlregler durchströmende Wassermenge erforderlich. Da der Strahlzerleger und gegebenenfalls auch die nachfolgenden Funktionseinheiten des Strahlreglers ein Strömungshindernis bilden, besteht bei niedrigen Drücken die Gefahr, dass durch den Strahlregler keine ausreichende Wassermenge durchfließen und der Strahl-regler seine Funktion nicht erfüllen kann,: und dass der aus dem Strahlregler austretende Wasserstrahl als unkomfortabel empfunden wird.

Aus der US 2013/0175366 A ist bereits ein sanitäres Auslaufelement der eingangs erwähnte Art vorbekannt, das mit seinem Einsetzgehäuse in den Wasserauslauf einer sanitären Auslaufarmatur einsetzbar ist. Das vorbekannte Auslaufelement hat einen Strahlregler zum Formen des austretenden Wasserstrahls, der einen Strahlzerleger aufweist, welcher das zuströmende Wasser in eine Vielzahl von Einzelstrahlen aufteilt. Diesem Strahlregler ist zuströmseitig eine Durchflussdrossel vorgeschaltet, welche die pro Zeiteinheit durchströmende Wassermenge auf einen festgelegten Wert begrenzt und die ein scheibenförmiges Drosselgehäuse mit zumindest einer Durchströmöffnung hat. Das scheibenförmige Drosselgehäuse ist im Einsetzgehäuse verschieblich geführt. In der Schließstellung liegt das scheibenförmige Drosselgehäuse der Durchflussdrossel derart auf einem Auflager auf, das eine zwischen dem Drosselgehäuse und dem Auflager gebildete und als Ringspalt ausgestaltete Auflageröffnung verschlossen wird. Während das zuströmende Wasser in der Offenstellung einerseits durch diese Auflageröffnung und andererseits durch die zumindest eine Durchflussöffnung im Drosselgehäuse zum Strahlregler fließen kann, wird das zuströmende Wasser in der Schließstellung des Drosselgehäuses allein durch die zumindest eine Durchflussöffnung in Richtung zum Strahlregler gezwungen. Somit legt sich das gegen die Rückstellkraft einer Rückstellfeder verschieblich geführte Drosselgehäuse bei erhöhtem Wasserdruck in der Schließstellung derart an den als Lochplatte ausgebildeten Strahlzerleger an, dass der Durchflussquerschnitt im Bereich: dieses Strahlzerlegers verringert ist.

Aus der :US 5,348,231 A ist bereits ein sanitäres Auslaufelement vorbekannt, das mit seinem Einsetzgehäuse in den Wasserauslauf einer sanitären Auslaufarmatur einsetzbar ist und einen Strahlregler zum Formen des austretenden Wasserstrahls hat. Dabei soll das vorbekannte Auslaufelement entweder einen Spray- oder Brausestrahl mit geringer Durchflussleistung oder einen demgegenüber voluminösen Gesamtstrahl bereitstellen. In dem am Wasserauslauf der Auslaufarmatur montierbaren Einsetzgehäuse des vorbekannten Auslaufelements ist ein Innengehäuse verschieblich geführt. Im Gehäuseinnenraum des verschieblich geführten Innengehäuses ist eine Durchflussdrossel angeordnet, die an dem abströmseitigen Stirnende ihres topfförmigen feststehenden Drosselgehäuses den aus zwei voneinander beabstandeten Lochplatten gebildeten Strahlregler aufweist. Das zum vorbekannten Auslaufelement strömende Wasser wird über einen hülsenförmigen Verbindungszapfen, der mit dem verschieblich geführten Innengehäuse starr verbunden ist und der ein abströmseitiges Hülsenende mit umfangsseitigen Auslauföffnungen hat, zunächst in das Innere des feststehenden Drosselgehäuses geführt, von wo das Wasser in einer Schließstellung des Innengehäuses in die der Durchströmrichtung entgegengesetzte Richtung umgelenkt und am Außenumfang des Verbindungszapfens vorbei nach außen geleitet wird, um von dort an das Drosselgehäuse außenseitig zu umspülen und als ringförmiger Spray- oder Brausestrahl aus dem Auslaufelement auszutreten. Während der Verbindungszapfen in der Schließstellung des Innengehäuses mit seinem abströmseitig geschlossenen Hülsenende den im Inneren des Drosselgehäuses vorgesehenen Zulauf zum Strahlregler versperrt, gibt der verbindungszapfen in einer offenstellung des Innengehäuses diesen Zulauf frei und das Wasser kann umlenkungsfrei durch den Strahlregler hindurch und als homogener zentraler Gesamtstrahl austreten.

Ein über einen größeren Druckbereich in etwa gleichförmiger Auslauf- oder Gesamtstrahl wird mit dem vorbekannten Auslaufelement nicht angestrebt.

Aus der DE 20 2010 016 867 U ist ein am Wasserauslauf montierbares Auslaufelement vorbekannt, das einen Strahlregler sowie einen zuströmseitigen vorgeschalteten Durchflussmengenregler oder Durchflussbegrenzer aufweist. Der Durchflussmengenregler oder Durchflussbegrenzer hat ein Stellelement, das im Zusammenwirken mit einem Gegenelement den Durchflussquerschnitt einregelt oder begrenzt. Dabei ist die Relativposition von Stellelement und Gegenelement mithilfe einer Drucktastmechanik in axialer Richtung derart verstellbar und festlegbar, dass dadurch der Durchflussquerschnitt im Durchflussmengenregler oder Durchflussbegrenzer variiert werden kann.

Aus der EP 2 762 234 A ist ein sanitäres Auslaufelement vorbekannt, das ebenfalls einen Strahlregler sowie einen zuströmseitig vorgeschalteten Durchflussmengenregler hat. Dabei sind im abströmseitig angeordneten Strahlregler ebenso zwei Strömungswege vorgesehen, von denen aber ein erster Strömungsweg in beiden Schaltzuständen geöffnet bleibt, während der zweite Strömungsweg im ersten: Schaltzustand gesperrt ist und im zweiten Schaltzustand derart zugeschaltet wird, dass sich eine gegenüber dem ersten Schaltzustand gesteigerte Durchflussleistung ergibt.

In der US 4 562 960 A ist ein sanitäres Auslaufelement vorbeschrieben, das einen Strahlbelüfter hat, dem ein Durchflussmengenregler in Strömungsrichtung vorgeschaltet ist. Während der Durchflussmengenregler das durchströmende Wasser druckunabhängigauf eine fest ausgelegte maximaleDurchflussleistung einzuregeln hat, soll der in Strömungsrichtung nachfolgende Strahlbelüfter einen homogenen, perlend-weichen und nicht-spritzenden Wasserstrahl formen. Der Durchflussmengenregler des aus US 4 562 960 A vorbekannten Auslaufelements weist einen ringförmigen Drosselkörper aus elastischem Material auf, der zwischen sich und einem innenliegenden Regelkörper einen Steuerspalt begrenzt, der mit steigendem Druck des durchströmenden Wassers sich zunehmend verengt, derart, dass auch bei ansteigendem Druck des durchströmenden Wassers eine festgelegte maximale Durchflussleistung nicht überschritten wird. Das vom Durchflussmengenregler des vorbekannten Auslaufelements kommende Wasser strömt anschließend durch den in Strö-mungsrichtung nachfolgenden Strahlbelüfter Dieser Strahlbelüfter weist einen Strahlzerleger auf,: der den zufließenden Wasserstrom in eine Vielzahl von Einzelstrahlen aufteilt. Dabei stellt der die vereinzelten Wasserstrahlen erzeugende Strahlzerleger eine Verengung des Durchflussquerschnitts dar, in welcher Querschnittsverengung die erzeugten Einzelstrahlen eine derartige Beschleunigung erfahren, dass auf der Abströmseite des Strahlzerlegers ein Unterdruck entsteht, mit dessen Hilfe Umgebungsluft in das Strahlreglergehäuse eingesaugt wird, die anschließend mit den Einzelstrahlen vermischt wird, bevor die derart belüfteten Einzelstrahlen in einem abströmseitigen Strömungsgleichrichter zu einem homogenen Gesamtstrahl wieder zusammengeführt werden.

Der im vorbekannten Auslaufelement vorgesehene Durchflussmengenregler mischt nicht zu einer Grundleistung des Auslaufelements bei niedrigen Wasserdrücken noch eine bestimmte zusätzliche Wassermenge hinzu, um diese zusätzliche Wassermenge bei hohen Durchflussleistungen vollständig zu unterbinden, - vielmehr regelt der vorbekannte Durchflussmengenregler die Durchflussleistung lediglich auf einen festgelegten Maximalwert ein.

Es besteht daher insbesondere die Aufgabe, ein sanitäres Auslaufelement der eingangs erwähnten Art zu schaffen, das sowohl in niedrigen als auch in hohen Druckbereichen stets einen optimalen Durchflussquerschnitt bereitstellt.

Die erfindungsgemäße Lösung dieser Aufgabe besteht bei dem sanitären Auslaufelement der eingangs erwähnten Art insbesondere darin, dass der Strahlzerleger als topfförmiger Diffusor ausgebildet ist, welcher in der Umfangswandung seiner Topfform Zerlegeröffnungen hat zum Zerlegen des durchströmenden Wassers in eine Vielzahl von Einzelstrahlen und dass der Diffusor an seinem zuströmseitigen Umfang eine Auflageraufnahme hat, auf der das Auflager aufliegt.

Das erfindungsgemäße Auslaufelement weist ein Einsetzgehäuse auf, das in den Wasserauslauf einer sanitären Wasserauslaufarmatur einsetzbar ist. Das Auslaufelement hat einen Strahlregler, der das aus dem Auslaufelement austretende Wasser zu einem homogenen und möglichst nicht-spritzenden wasserstrahl zu formen hat. Damit der Strahlregler das durch das Auslaufelement durchströmende Wasser besonders gut formen kann, weist der Strahlregler einen Strahlzerleger auf, der das durchströmende Wasser in eine Vielzahl von Einzelstrahlen aufteilt. Diesem Strahlregler ist ein Durchflussmengenregler oder eine Durchflussdrossel vorgeschaltet, welcher/welche die pro Zeiteinheit durchströmende Wassermenge auf einen festgelegten Wert einregelt. Dieser Durchflussmengenregler oder diese Durchflussdrossel ist mit dem Drossel- oder Reglergehäuseim Einsetzgehäuse verschieblich geführt und von einer Offenstellung, in der das Drossel- oder Reglergehäuse an seiner Gehäuseaußenseite entlang zumindest von einer Teilmenge des das Auslaufelement durchströmenden Wassers umspült wird, gegen die Rückstellkraft zumindest eines Rückstellelements in eine Schließstellung bewegbar. Damit das das Auslaufelement durchströmende Wasser in der Schließstellung allein durch den Durchflussmengenregler oder die Durchflussdrossel durchströmen muss und dort eingeregelt oder begrenzt werden kann, ohne dass nennenswerte Fehlströme am Durchflussmengenregler oder an der Durchflussdrossel vorbei zu befürchten sind, ist vorgesehen, dass der Durchflussmengenregler oder die Durchflussdrossel mit dem Drossel- oder Reglergehäuse in der Schließstellung derart auf einem Auflager aufliegt, das eine Auflageröffnung verschlossen wird. In dieser Schließstellung kann das durch das Drossel- oder Reglergehäuse des Auslaufelements zum Strahlregler strömende Wasser nur noch den Durchflussmengenregler oder die Durchflussdrossel durchströmen. Während also in der Offenstellung der Wasserdruck noch nicht eine Höhe erreicht hat, bei welcher einerseits die Rückstellkraft des wenigstens einen Rückstellelements überwunden wird, und andererseits der Durchflussmengenregler oder die Durchflussdrossel die Durchflussleistung auf den festgelegten Wert runterzuregeln oder zu begrenzen hat, wird bei einem demgegenüber erhöhten Wasserdruck der Durchflussmengenregler oder die Durchflussdrossel in die Schließstellung bewegt, in der das Wasser nur noch durch den Durchflussmengenregler oder die Durchflussdrossel derart passieren kann, dass der Durchflussmengenregler oder die Durchflussdrossel die auslaufende Wassermenge funktionsgerecht auf den festgelegten Maximalwert einregeln kann. Da durch Auswahl eines geeigneten Rückstellelements mit festliegender Rückstellkraft sich auch der Wasserdruck festlegen lässt, zu dem der Durchflussmengenregler oder die Durchflussdrossel in der Schließstellung funktionsgerecht: arbeiten soll, ist das erfindungsgemäße Auslaufelement besonders gut und einfach abzustimmen und zeichnet sich durch einen funktionssicheren und stabilen Betrieb aus.

Grundsätzlich ist im erfindungsgemäßen Auslaufelement jeder Durchflussmengenregler einsetzbar, der die gewünschte maximale Durchflussleistung sicher einregeln kann. Bevorzugt wird jedoch eine Ausführungsform, bei der der Durchflussmengenregler ein ringförmiges Drosselelement aus elastischem Material hat, das in einer Ringnut im Reglergehäuse angeordnet ist und einen Gehäusekern umgreift, dass zumindest einer der die Ringnut begrenzenden Umfangswandungen eine Regelprofilierung trägt, und dass das Reglergehäuse: im Bereich des Nutgrunds wenigstens eine Durchflussöffnung aufweist. Solche Durchflussmengenregler sind einfach in Konstruktion und Herstellung und haben sich bewährt.

Dabei ist vorgesehen, dass der Durchflussmengenregler zwischen sich und der zumindest einen, die Regelprofilierung tragenden Umfangswandung einen Ringspalt begrenzt, und dass der Drosselkörper sich bei steigendem Druck des durchströmenden Wassers derart in die Regelprofilierung einformt, dass sich der Ringspalt zunehmend verengt. Das durch das Auslaufelement durchströmende Wasser muss den Ringspalt passieren, der zwischen dem Drosselkörper und der Regelprofilierung vorgesehen ist. Mit zunehmendem Wasserdruck formt sich der elastische Drosselkörper zunehmend auch in die Regelprofilierung ein, so dass sich der Ringspalt derart verengt, dass unabhängig vom Wasserdruck ein festgelegter Maximalwert der Durchflussleistung nicht überschritten wird.

Um einen funktionsgerechten Betrieb des Durchflussmengenreglers in der Schließstellung zu gewährleisten, ist es vorteilhaft, wenn die zumindest eine Durchflussöffnung des Durchflussmengenreglers in der Schließstellung in der Auflageröffnung mündet.

Um Fehlströme in der Schließstellung am Durchflussmengenregler oder an der Durchflussdrossel vorbei noch zusätzlich ausschließen zu können und um das Drossel- oder Reglergehäuse in Schließstellung dicht auf das Auflager aufzulegen, ist es zweckmäßig, wenn zwischen dem Drossel- oder Reglergehäuse und dem Auflager zumindest eine Ringdichtung vorgesehen ist.

Dabei sieht eine bevorzugte Ausführungsform gemäß der Erfindung vor, dass zumindest eine Ringdichtung an: das Reglergehäuse oder an dem die Auflageröffnung umgrenzenden Randbereich des Auflagers einstückig angeformt ist.

Um den Durchflussmengenregler oder die Durchflussdrossel sicher zwischen der Schließstellung und der Offenstellung zu verschieben, ist es zweckmäßig, wenn an dem Topfboden des topfförmigen Diffusors ein Führungszapfen vorsteht, der eine Führungsöffnung im Drossel- oder Reglergehäuse durchsetzt.

Diese Führungsöffnung ist vorzugsweise etwa koaxial zur Längsachse des Drossel- oder Reglergehäuses angeordnet. Eine bevorzugte Ausführungsform gemäß der Erfindung sieht bei einem Durchflussmengenregler daher vor, dass die Führungsöffnung den Gehäusekern des Reglergehäuses durchsetzt.

Dabei: sieht eine bevorzugte Ausführungsform gemäß der Erfindung vor, dass das Auflager als Ringscheibe ausgebildet ist.

Eine Weiterbildung gemäß der Erfindung sieht vor, dass der Führungszapfen an seinem freien Zapfenende Federarme trägt, dass an den Federarmen außenseitig schiebeanschläge für das Drossel- oder Reglergehäuse vorgesehen sind, und dass die Federarme aus einer Funktionsstellung gegen ihre Eigenelastizität in eine Lösestellung zueinander einlenkbar oder einfederbar sind. Bei dieser Ausführungsform weist der Führungszapfen an seinem freien Zapfenende Federarme auf. An den Federarmen sind außenseitig Schiebeanschläge für das Drossel- oder Reglergehäuse vorgesehen, die den Schiebeweg des Drossel- oder Reglergehäuses in die dem Diffusor abgewandte Richtung begrenzen. Damit das Drossel- oder Reglergehäuse über die Schiebeanschläge auf die Federarme und die Führungszapfen aufgeschoben werden kann, sind die Federarme aus einer Funktionsstellung gegen ihre Eigenelastizität in eine Lösestellung zueinander einlenk- oder einfederbar.

Dabei ist es besonders vorteilhaft, wenn das Auslaufelement ein Vorsatz- oder Filtersieb hat, wenn das vorsatz- oder Filtersieb am Einsetzgehäuse vorzugsweise lösbar befestigt ist, und wenn der Durchflussmengenregler oder die Durchflussdrossel im Einsetzgehäuse zwischen dem Strahlzerleger und dem Vorsatz- oder Filtersieb angeordnet und verschieblich geführt ist.

Auch bei einer vergleichsweise hohen, auf den Durchflussmengenregler oder die Durchflussdrossel einwirkenden Rückstellkraft des Rückstellelements besteht nicht die Gefahr, dass das Rückstellelement den Durchflussmengenregler oder die Durchflussdrossel über den Führungszapfen hinaus in Richtung zum Vorsatz- oder Filtersieb unkontrolliert verschiebt, wenn am Vorsatz- oder Filtersieb ein Sicherungszapfen vorgesehen ist, der bei am Drossel- oder Reglergehäuse verrastetem Vorsatz- oder Filtersieb derart in einen zwischen den Federarmen verbleibenden Freiraum vorsteht, dass die Federarme in ihrer Funktionsstellung gesichert sind. Wird bei dieser Ausführungsform das Vorsatz- oder Filtersieb am Drossel- oder Reglergehäuse verrastet, steht am Vorsatz- oder Filtersieb ein Sicherungszapfen derart in einen zwischen den Federarmen verbleibenden Freiraum vor, dass ein Einlenken oder Einfedern der Federarme in Richtung zueinander verhindert wird.

Eine besonders einfache und bevorzugte Ausführungsform gemäß der Erfindung sieht vor, dass das zumindest eine Rückstellelement eine Rückstell- oder Druckfeder ist.

Eine bevorzugte Weiterbildung gemäß der Erfindung sieht vor, dass zwischen dem Topfboden des Diffusors und dem Drossel- oder Reglergehäuse ein Dämpfungsring vorgesehen ist, dessen Ringöffnung den Führungszapfen durchsetzt und dass der Dämpfungsring den Schiebeweg des Drossel- oder Reglergehäuses in Richtung zum Strahlzerleger begrenzt. Dieser Dämpfungsring umgreift den Führungszapfen in seinem, dem Diffusor zugewandten Zapfen-Teilbereich. Dieser Dämpfungsring kann dem am Führungszapfen verschieblich geführten Durchflussmengenregler oder der dort verschieblich geführten Durchflussdrossel als Anschlagdämpfer dienen, - gleichzeitig kann der Dämpfungsring aber auch einen zwischen dem Führungszapfen:und der Führungsöffnung am Gehäusekern des Drossel- oder Reglergehäuses verbleibenden Ringspalt verschließen, wenn sich der Durchflussmengenregler oder die Durchflussdrossel in der Schließstellung befindet.: Da dieser Ringspalt in der Schließstellung verschlossen ist, werden auch in diesem Bereich unerwünschte Fehlströme vermieden.
Zweckmäßig ist es, wenn die Auflageraufnahme vorzugsweise als Ringabsatz ausgebildet ist.
Weitere Merkmale gemäß der Erfindung ergeben sich aus den Ansprüchen in Verbindung mit den Zeichnungen sowie der Be schreibung. Nachstehend wir die Erfindung anhand eines bevorzugten Ausführungsbeispieles noch näher beschrieben.

Es zeigt:
- Fig. 1: ein in einem Längsschnitt gezeigtes sanitäres Auslaufelement, das ein zuströmseitiges Vorsatz- oder Filtersieb sowie einen abströmseitigen Strahlregler hat, wobei zwischen dem Vorsatz- oder Filtersieb und dem Strahlregler ein Durchflussmengenregler im Einsetzgehäuse des Auslaufelements verschieblich geführt ist und wobei sich der Durchflussmengenregler in Figur 1 in einer Offenstellung befindet,
- Fig. 2: das ebenfalls längsgeschnittene Auslaufelement aus Figur 1, wobei sich der Durchflussmengenregler hier in einer Schließstellung befindet, und
- Fig. 3: das sanitäre Auslaufelement aus den Figuren 1 und 2 in einer auseinandergezogenen Einzelteildarstellung.

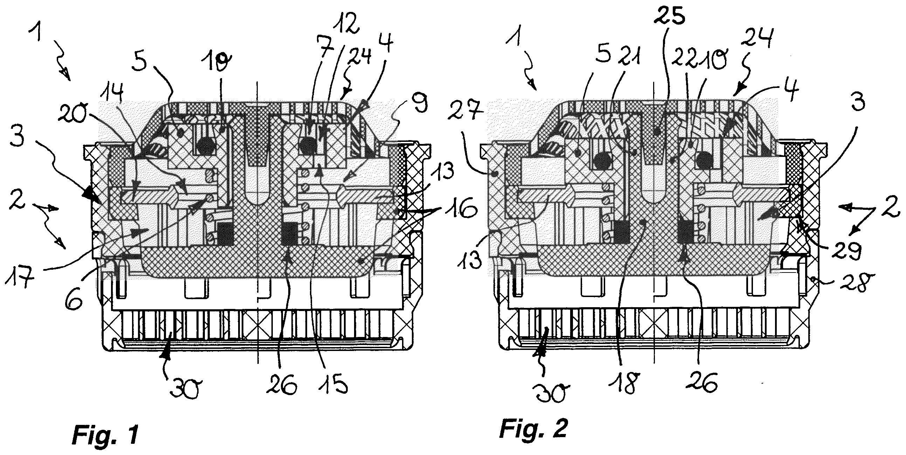

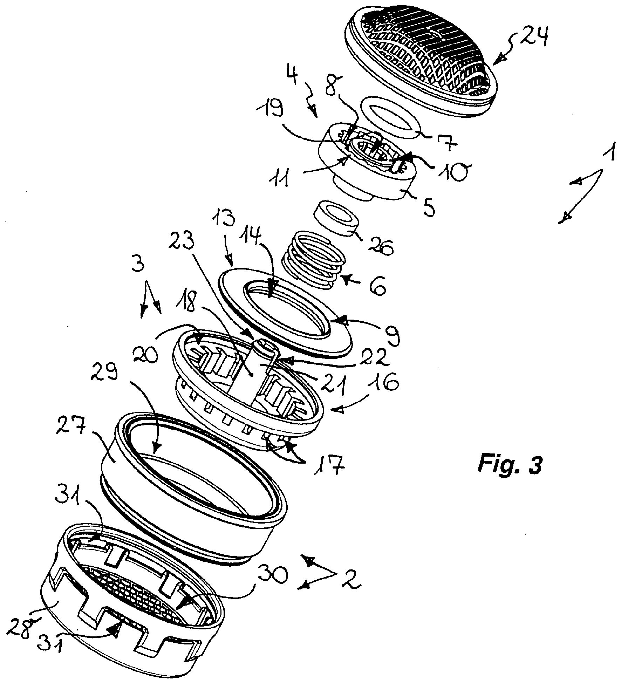

In den Figuren 1 bis 3 ist ein sanitäres Auslaufelement 1 dargestellt, das mit seinem Einsetzgehäuse 2 in den Wasserauslauf einer hier nicht weiter gezeigten sanitären Auslaufarmatur einsetzbar ist. Das Auslaufelement 1 hat einen Strahlregler 3, der das aus dem Auslaufelement 1 ausströmende Wasser zu einem homogenen und möglichst nicht-spritzenden Wasserstrahl zu formen hat. Diesem Strahlregler 3 ist ein Durchflussmengenregler 4 vorgeschaltet, der die pro Zeiteinheit durchströmende Wassermenge auf einen festgelegten Maximalwert einregelt. Dieser Durchflussmengenregler 4 ist mit seinem Reglergehäuse 5 im Einsetzgehäuse 2 des Auslaufelements 1 verschieblich geführt und von einer in Figur 1 gezeigten Offenstellung, in der das Reglergehäuse 5 an seiner Gehäuseaußenseite entlang zumindest von einer Teilmenge des das Auslaufelement 1 durchströmenden Wassers umspült wird, gegen die Rückstellkraft zumindest eines Rückstellelements 6 in die in Figur 2 gezeigte Schließstellung bewegbar.

In der in Figur 2 gezeigten Schließstellung kann das durch das Einsetzgehäuse 2 des Auslaufelements 1 zum Strahlregler 3 strömende Wasser nur noch den Durchflussmengenregler 4 durchströmen. Während also in der Offenstellung gemäß Figur 1 der Wasserdruck noch nicht eine Höhe erreicht hat, bei welcher einerseits die Rückstellkraft des wenigstens einen Rückstellelements 6 überwunden wird und andererseits der Durchflussmengenregler 4 die Durchflussleistung auf den festgelegten Maximalwert runterzuregeln hat, wird bei einem demgegenüber erhöhten Wasserdruck der Durchflussmengenregler 4 in seine Schließstellung bewegt, in der das Wasser nur noch durch den Durchflussmengenregler 4 passieren kann, derart, dass der Durchflussmengenregler 4 die auslaufende Wassermenge funktionsgerecht auf den festgelegten Maximalwert einregeln kann.

Da durch Auswahl eines geeigneten Rückstellelements 6 mit festliegender Rückstellkraft sich auch der Wasserdruck festlegen lässt, zu dem der Durchflussmengenregler 4 in der Schließstellung funktionsgerecht arbeiten soll, ist das erfindungsgemäße Auslaufelement 1 besonders gut und einfach abzustimmen und zeichnet sich durch einen funktionssicheren und stabilen Betrieb aus.

Der im Einsetzgehäuse 2 des Auslaufelements 1 verschieblich geführte Durchflussmengenregler 4 hat einen ringförmiges Drosselkörper 7 aus elastischem Material. Der Drosselkörper 7 ist in einer Ringnut 8 im Reglergehäuse 6 angeordnet und umgreift einen zentralen Gehäusekern 10. Zumindest einer der die Ringnut 8 begrenzenden Umfangswandungen trägt eine Regelprofilierung 11, in die sich der elastische Drosselkörper 7 bei steigendem Wasserdruck zunehmend einformt. Diese Regelprofilierung 11 ist im hier gezeigten Ausführungsbeispiel an der außenliegenden Umfangswandung der Ringnut 8 vorgesehen. Der Drosselkörper 7 begrenzt zwischen sich und der zumindest einen, die Regelprofilierung 11 tragenden Umfangswandung einen Ring- oder Steuerspalt 12. Da der Drosselkörper 7 sich bei steigendem Druck des durch den Ring- oder Steuerspalt 12 strömenden Wassers in die Regelprofilierung 11 einformt, wird der Ringspalt 12 zunehmend verengt und auch bei steigendem Wasserdruck kann die Durchflussleistung einen festgelegten Maximalwert nicht übersteigen.

In Figur 2 ist dargestellt, dass der Durchflussmengenregler 4 mit seinem Reglergehäuse 5 in der in Figur 2 gezeigten Schließstellung derart auf einem Auflager 13 aufliegt, dass eine Auflageröffnung 14 verschlossen wird. Dabei mündet die zumindest eine Durchflussöffnung 15 des Durchflussmengenreglers 4 in der Schließstellung in der Auflageröffnung 14.

Damit der Durchflussmengenregler 4 mit seinem Reglergehäuse 5 in der in Figur 2 gezeigten Schließstellung die Auflageröffnung 14 dicht verschließen kann, ist zwischen dem Reglergehäuse 5 und dem Auflager 13 zumindest eine Ringdichtung 9 vorgesehen. Diese zumindest eine Ringdichtung 9 ist hier an den die Auflageröffnung 14 umlaufenden Randbereich des Auflagers 13 einstückig angeformt.

Damit der Strahlregler 3 das das Auslaufelement 1 durchströmende Wasser in eine Vielzahl von Einzelstrahlen zerteilen kann, weist der Strahlregler 3 einen Strahlzerleger auf. Dieser Strahlzerleger ist hier als etwa topfförmiger Diffusor 16 ausgebildet, der in der Umfangswandung seiner Topfform Zerlegeröffnungen 17 hat. Diese Zerlegeröffnungen 17 sollen das durchströmende Wasser in eine entsprechende Anzahl von Einzelstrahlen aufteilen.

Der Topfboden des topfförmigen Diffusors 16 ist als lochfreie Prallfläche ausgebildet, die das zunächst in Längsrichtung des Reglergehäuses 5 einströmende Wasser radial zur Seite nach außen hin ablenkt und zu den Zerlegeröffnungen 17 führt. An dem Topfboden des topfförmigen Diffusors 16 steht ein Führungszapfen 18 vor, der eine Führungsöffnung 19 im Reglergehäuse 5 durchsetzt. Diese Führungsöffnung 19 durchsetzt den Gehäusekern 10 des Durchflussmengenreglers 4. Der Diffusor 16 hat an seinem zuströmseitigen Innenumfang eine Auflageraufnahme, auf der das Auflager 13 aufliegt. Diese Auflageraufnahme ist hier als Ringabsatz 20 ausgebildet. Das Auflager 13 bildet mit seiner zentralen Auflageröffnung 14 eine Ringscheibe.

Aus einem Vergleich der Figuren 1 bis 3 wird deutlich, dass der Führungszapfen 18 an seinem freien Zapfenende Federarme 21, 22 trägt, an denen außenseitig Schiebeanschläge 23 vorgesehen sind. Diese Schiebeanschläge 23 begrenzen den Schiebeweg des Durchflussmengenreglers 4 in die dem durchströmenden Wasser entgegengesetzte Richtung. Diese Federarme 21, 22 sind aus einer Funktionsstellung gegen ihre Eigenelastizität in eine Lösungsstellung zueinander einlenk- oder einfederbar.

Das Auslaufelement 1 hat ein Vorsatz- oder Filtersieb 24, das ein Eindringen der im Wasser eventuell mitgeführten Schmutzpartikel in das Gehäuseinnere des Einsetzgehäuses 2 verhindert. Dieses Vorsatz- oder Filtersieb 24 ist am Einsetzgehäuse 2 vorzugsweise lösbar befestigbar und insbesondere verrastbar. Zwischen dem zuströmseitigen Vorsatz- oder Filtersieb 24 und dem hier als Diffusor 16 ausgebildeten Strahlzerleger ist der Durchflussmengenregler 4 im Einsetzgehäuse 3 angeordnet und verschieblich geführt.

In den Figuren 1 und 2 ist gut erkennbar, dass am Vorsatz- oder Filtersieb 24 ein Sicherungszapfen 25 vorgesehen ist, der bei am Einsetzgehäuse 3 verrastetem Vorsatz- oder Filtersieb 24 derart in einen zwischen den Federarmen 21, 22 verbleibenden Freiraum vorsteht, dass die Federarme 21, 22 gegen ein Einlenken oder Einfedern zueinander gesichert sind. Auf diese Weise wird verhindert, dass das auf den Durchflussmengenregler 4 einwirkende Rückstellelement 6, das vorzugsweise als Druckfeder und insbesondere als Wendelfeder ausgebildet ist, den Durchflussmengenregler 4 derart gegen das Vorsatz- oder Filtersieb 24 presst, dass sich die lösbare Verbindung zwischen diesem Vorsatz- oder Filtersieb 24 und dem Einsetzgehäuse 2 unbeabsichtigt löst.

In den Figuren 1 und 2 ist auch erkennbar, dass zwischen dem Topfboden des Diffusors 16 und dem Reglergehäuse 5 ein Dämpfungsring 26 vorgesehen ist, dessen Ringöffnung der Führungszapfen 18 durchsetzt, wobei der Dämpfungsring 26 den Schiebeweg des Reglergehäuses 5 in Richtung zum Strahlzerleger 16 begrenzt.

Das Einsetzgehäuse 2 ist hier zweiteilig ausgebildet und weist ein zuströmseitiges Gehäuseteil 27 sowie ein damit lösbar verrastbares abströmseitiges Gehäuseteil 28 auf. Der Diffusor 16 ist von der Zuströmseite des Gehäuseteiles 27 aus darin bis zu einem Ringabsatz 29 eingesetzt.

An der die Auslaufstirnfläche des Auslaufelements 1 bildenden Stirnseite des abströmseitigen Gehäuseteils 28 ist ein Strömungsgleichrichter vorgesehen, der die Einzelstrahlen zu einem homogenen Gesamtstrahl wieder zusammenzufügen hat. Dieser Strömungsgleichrichter weist eine Gitter-, Netz- oder Lochstruktur auf. Bei dem hier gezeigten Ausführungsbeispiel ist der Strömungsgleichrichter als Lochplatte 30 ausgebildet, die eine Vielzahl wabenzellenartiger Durchflusslöcher hat und die einstückig an das abströmseitige Gehäuseteil 28 angeformt ist.

Der Strahlregler 3 des hier gezeigten Auslaufelements 1 ist als sogenannter Strahlbelüfter ausgebildet, bei dem das durchströmende Wasser mit Umgebungsluft durchmischt wird. Den Zerlegeröffnungen 17 des Diffusors 16 folgt in Strömungsrichtung dazu eine Querschnittsverengung, in der die vom Diffusor 16 kommenden Einzelstrahlen eine Geschwindigkeitserhöhung erfahren. Durch diese Geschwindigkeitserhöhung entsteht auf der Abströmseite des Diffusors 16 ein Unterdruck, der Umgebungsluft durch Gehäuseöffnungen 31 ansaugt, die am Gehäuseumfang des Einsetzgehäuses 2 vorgesehen sind.

Statt des Durchflussmengenreglers 4 kann in dem hier dargestellten Auslaufelement 1 auch eine Durchflussdrossel vorgesehen sein, die das pro Zeiteinheit durchströmende Wasser auf einen festgelegten Wert zu begrenzen hat. Eine solche Durchflussdrossel kann wie der hier dargestellte Durchflussmengenregler 4, - jedoch ohne den elastischen Drosselkörper 7, ausgebildet sein.

### Bezugszeichenliste

- 1: sanitäres Auslaufelement
- 2: Einsetzgehäuse
- 3: Strahlregler
- 4: Durchflussmengenregler
- 5: Reglergehäuse
- 6: Rückstellelement
- 7: Drosselkörper
- 8: Ringnut
- 9: Ringdichtung
- 10: Gehäusekern
- 11: Regelprofilierung
- 12: Ring- oder Steuerspalt
- 13: Auflager
- 14: Auflageröffnung
- 15: Durchflussöffnung
- 16: Diffusor
- 17: Zerlegeröffnung
- 18: Führungszapfen
- 19: Führungsöffnung
- 20: Ringabsatz
- 21: Federarm
- 22: Federarm
- 23: Schiebeanschläge
- 24: Vorsatz- oder Filtersieb
- 25: Sicherungszapfen
- 26: Dämpfungsring
- 27: zuströmseitiges Gehäuseteil
- 28: abströmseitiges Gehäuseteil
- 29: Ringabsatz
- 30: Lochplatte
- 31: Belüftungsöffnung

## Patentansprüche

1. Sanitäres Auslaufelement (1), das mit seinem Einsetzgehäuse (2) in den Wasserauslauf einer sanitären Auslaufarmatur einsetzbar ist und einen Strahlregler (3) zum Formen des austretenden Wasserstrahls hat, der einen Strahlzerleger (16) aufweist und dem zuströmseitig ein Durchflussmengenregler (4) oder eine Durchflussdrossel vorgeschaltet ist, welche/welcher die pro Zeiteinheit durchströmende Wassermenge auf einen festgelegten Wert einregelt oder begrenzt und ein Drossel- oder Reglergehäuse (5) hat, das im Einsetzgehäuse (2) verschieblich geführt und von einer Offenstellung, in der das Drossel- oder Reglergehäuse (5) zumindest von einer Teilmenge des Wassers umspült wird, gegen die Rückstellkraft zumindest eines Rückstellelements in eine Schließstellung bewegbar ist, in der das zum Strahlregler (3) strömende Wasser den Durchflussmengenregler (4) oder die Durchflussdrossel umströmt, wobei der Durchflussmengenregler (4) oder die Durchflussdrossel mit seinem/ihrem Drossel- oder Reglergehäuse (5) in der Schließstellung derart auf einem Auflager (13) aufliegt, dass eine Auflageröffnung (14) verschlossen wird, **dadurch gekennzeichnet, dass** der Strahlzerleger als topfförmiger Diffusor (16) ausgebildet ist, welcher in der Umfangswandung seiner Topfform Zerlegeröffnungen (17) hat zum Zerlegen des durchströmenden Wassers in eine Vielzahl von Einzelstrahlen, und dass der Diffusor (16) an seinem zuströmseitigen Innenumfang eine Auflageraufnahme hat, auf der das Auflager (13) aufliegt.

2. Auslaufelement nach Anspruch 1, **dadurch gekennzeichnet, dass** der Durchflussmengenregler (4) ein ringförmiges Drosselelement (7) aus elastischem Material hat, das in einer Ringnut (8) im Reglergehäuse (5) angeordnet ist und einen Gehäusekern (10) umgreift, dass zumindest eine der die Ringnut (8) begrenzenden Umfangswandungen eine Regelprofilierung (11) trägt, und dass das Reglergehäuse (5) im Bereich des Nutgrunds wenigstens eine Durchflussöffnung (15) aufweist.

3. Auslaufelement nach Anspruch 2, **dadurch gekennzeichnet, dass** das Drosselelement (7) zwischen sich und der zumindest einen, die Regelprofilierung (11) tragenden Umfangswandung einen Steuer- oder Ringspalt (12) begrenzt, und dass der Drosselkörper (7) sich bei steigendem Druck des durchströmenden Wassers derart in die Regelprofilierung (11) einformt, dass sich der Ringspalt (12) zunehmend verengt.

4. Auslaufelement nach Anspruch 2 oder 3, **dadurch gekennzeichnet, dass** die zumindest eine Durchflussöffnung (15) des Durchflussmengenreglers (4) in der Schließstellung in der Auflageröffnung (14) mündet.

5. Auslaufelement nach einem der Ansprüche 1 bis 4, **dadurch gekennzeichnet, dass** zwischen dem Drossel- oder Reglergehäuse (5) und dem Auflager (13) zumindest eine Ringdichtung vorgesehen ist.

6. Auslaufelement nach Anspruch 5, **dadurch gekennzeichnet, dass** die zumindest eine Ringdichtung an das Drossel- oder Reglergehäuse (5) oder an den die Auflageröffnung (14) umgrenzenden Randbereich des Auflagers (13) einstückig angeformt ist.

7. Auslaufelement nach einem der Ansprüche 1 bis 6, **dadurch gekennzeichnet, dass** an dem Topfboden des topfförmigen Diffusors (16) ein Führungszapfen (18) vorsteht, der eine Führungsöffnung (19) im Drossel- oder Reglergehäuse (5) durchsetzt.

8. Auslaufelement nach Anspruch 7, **dadurch gekennzeichnet, dass** die Führungsöffnung (19) den Gehäusekern (10) des Reglergehäuses (5) durchsetzt.

9. Auslaufelement nach einem der Ansprüche 1 bis 8, **dadurch gekennzeichnet, dass** das Auflager (13) als Ringscheibe ausgebildet ist.

10. Auslaufelement nach einem der Ansprüche 7 bis 9, **dadurch gekennzeichnet, dass** der Führungszapfen (18) an seinem freien Zapfenende Federarme (21, 22) trägt, dass an den Federarmen (21, 22) außenseitig Schiebeanschläge : (23) für das Drossel- oder Reglergehäuse (5) vorgesehen sind und dass die Federarme (21, 22) aus einer Funktionsstellung gegen ihre Eigenelastizität in eine Lösestellung zueinander einlenk- oder einfederbar sind.

11. Auslaufelement nach einem der Ansprüche 1 bis 10, **dadurch gekennzeichnet, dass** das Auslaufelement (1) ein Vorsatz- oder Filtersieb (24) hat, dass das Vorsatz- oder Filtersieb (24) am Einsetzgehäuse (2) vorzugsweise lösbar befestigbar ist, und dass der Durchflussmengenregler (4) oder die Durchflussdrossel im Einsetzgehäuse (2) zwischen dem Strahlzerleger (16) und dem Vorsatz- oder Filtersieb (24) angeordnet und verschieblich geführt ist.

12. Auslaufelement nach Anspruch 11, **dadurch gekennzeichnet, dass** am Vorsatz- oder Filtersieb (24) ein Sicherungszapfen (25) vorgesehen ist, der bei am Einsetzgehäuse (2) verrastetem Vorsatz- oder Filtersieb (24) derart in einen zwischen den Federarmen (21, 22) verbleibenden Freiraum vorsteht, dass die Federarme (21, 22) in ihrer Funktionsstellung gesichert sind.

13. Auslaufelement nach einem der Ansprüche 1 bis 12, **dadurch gekennzeichnet, dass** das zumindest eine Rückstellelement (6) eine Rückstell- oder Druckfeder ist.

14. Auslaufelement nach einem der Ansprüche 7 bis 13, **dadurch gekennzeichnet, dass** zwischen dem Topfboden des Diffusors (16) und dem Reglergehäuse (5) ein Dämpfungsring (26) vorgesehen ist, dessen Ringöffnung den Führungszapfen (18) durchsetzt und dass der Dämpfungsring (26) den Schiebeweg des Drossel- oder Reglergehäuses (5) in Richtung zum Strahlzerleger (16) begrenzt.

15. Auslaufelement nach einem der Ansprüche 1 bis 14, **dadurch gekennzeichnet, dass** die Auflageraufnahme als Ringabsatz (20) ausgebildet ist.

## Claims

1. Sanitary outlet element (1) which can be inserted, by way of its insert housing (2), into the water outlet of a sanitary outlet fitting and has a jet regulator (3) for shaping the exiting water jet, the jet regulator having a jet divider (16) and there being arranged in front of the jet regulator, as seen on the inflow side, a throughflow-quantity regulator (4) or a throughflow restrictor, by means of which the quantity of water flowing through per unit of time is adjusted, or limited, to a set value and which has a flow-restrictor housing or regulator housing (5), which is guided in a displaceable manner in the insert housing (2) and can be moved, counter to the restoring force of at least one restoring element, from an open position, in which the flow-restrictor housing or regulator housing (5) has at least some of the water flowing around it, into a closed position, in which the water flowing to the jet regulator (3) flows around the throughflow-quantity regulator (4) or the throughflow restrictor wherein, in the closed position, the throughflow-quantity regulator (4) or the throughflow restrictor rests, by way of its flow-restrictor housing or regulator housing (5), on a bearing means (13) such that a bearing-means opening (14) is closed, **characterized in that** the jet divider is designed in the form of a cup-like diffuser (16) which, in the circumferential wall of its cup shape, has divider openings (17), by means of which the water flowing through is divided into a multiplicity of individual jets, and **in that** the diffuser (16), on its inflow-side inner circumference, has a bearing-means mount, on which the bearing means (13) rests.

2. Outlet element according to Claim 1, **characterized in that** the throughflow-quantity regulator (4) has an annular flow-restricting element (7) which is made of elastic material, is arranged in an annular groove (8) in the regulator housing (5) and engages around a housing core (10), **in that** at least one of the circumferential walls delimiting the annular groove (8) bears a regulating profiling (11), and **in that** the regulator housing (5), in the region of the groove floor, has at least one throughflow opening (15).

3. Outlet element according to Claim 2, **characterized in that** the flow-restricting element (7) delimits, between itself and the at least one circumferential wall bearing the regulating profiling (11), a control or annular gap (12), and **in that** the flow-restricting body (7), as the pressure of the water flowing through increases, embeds itself into the regulating profiling (11) such that the annular gap (12) narrows to an increasing extent.

4. Outlet element according to Claim 2 or 3, **characterized in that**, in the closed position, the at least one throughflow opening (15) of the throughflow-quantity regulator (4) opens out in the bearing-means opening (14).

5. Outlet element according to one of Claims 1 to 4, **characterized in that** at least one annular seal is provided between the flow-restrictor housing or regulator housing (5) and the bearing means (13).

6. Outlet element according to Claim 5, **characterized in that** the at least one annular seal is integrally formed on the flow-restrictor housing or regulator housing (5) or on that peripheral region of the bearing means (13) which surrounds the bearing-means opening (14).

7. Outlet element according to one of Claims 1 to 6, **characterized in that** a guide pin (18) projects on the cup base of the cup-like diffuser (16) and passes through a guide opening (19) in the flow-restrictor housing or regulator housing (5).

8. Outlet element according to Claim 7, **characterized in that** the guide opening (19) passes through the core (10) of the regulator housing (5).

9. Outlet element according to one of Claims 1 to 8, **characterized in that** the bearing means (13) is designed in the form of an annular disc.

10. Outlet element according to one of Claims 7 to 9, **characterized in that** the guide pin (18), at its free end, bears resilient arms (21, 22), **in that** sliding stops (23) for the flow-restrictor housing or regulator housing (5) are provided on the outside of the resilient arms (21, 22), and **in that** the resilient arms (21, 22) can be deflected, or moved resiliently, inwards in relation to one another, counter to their inherent elasticity, from a functional position into a release position.

11. Outlet element according to one of Claims 1 to 10, **characterized in that** the outlet element (1) has an attachment screen or filter screen (24), **in that** the attachment screen or filter screen (24) can be fastened preferably in a releasable manner on the insert housing (2), and **in that** the throughflow-quantity regulator (4) or the throughflow restrictor is arranged, and guided in a displaceable manner, in the insert housing (2) between the jet divider (16) and the attachment screen or filter screen (24).

12. Outlet element according to Claim 11, **characterized in that** the attachment screen or filter screen (24) has provided on it a securing pin (25) which, with the attachment screen or filter screen (24) latched on the insert housing (2), projects into a free space remaining between the resilient arms (21, 22) such that the resilient arms (21, 22) are secured in their functional position.

13. Outlet element according to one of Claims 1 to 12, **characterized in that** the at least one restoring element (6) is a restoring spring or compression spring.

14. Outlet element according to one of Claims 7 to 13, **characterized in that** the cup base of the diffuser (16) and the regulator housing (5) have provided between them a damping ring (26), the guide pin (18) passing through the annular opening of said damping ring, and **in that** the damping ring (26) delimits the sliding path of the flow-restrictor housing or regulator housing (5) in the direction of the jet divider (16).

15. Outlet element according to one of Claims 1 to 14, **characterized in that** the bearing-means mount is designed in the form of an annular shoulder (20).

## Revendications

1. Élément de sortie sanitaire (1), qui peut être inséré avec son boîtier d'insertion (2) dans la sortie d'eau d'une robinetterie de sortie sanitaire, et qui comporte un régulateur de jet (3) destiné à former le jet d'eau sortant, qui présente un brise-jet (16) et qui est précédé en amont par un régulateur de débit (4) et/ou un limiteur de débit, qui régule ou qui limite le débit d'eau s'écoulant par unité de temps à une valeur fixée et qui comporte un boîtier de limiteur ou de régulateur (5), qui est guidé de façon coulissante dans le boîtier d'insertion (2) et qui est déplaçable d'une position d'ouverture, dans laquelle le boîtier de limiteur ou de régulateur (5) est balayé par au moins une quantité partielle de l'eau, contre la force de rappel d'au moins un élément de rappel à une position de fermeture, dans laquelle l'eau s'écoulant vers le régulateur de jet (3) enveloppe le régulateur de débit (4) ou le limiteur de débit, dans lequel le régulateur de débit (4) ou le limiteur de débit repose dans la position de fermeture par son boîtier de limiteur ou de régulateur (5) sur un support (13), de telle manière qu'une ouverture (14) du support soit fermée, **caractérisé en ce que** le brise-jet est formé par un diffuseur en forme de godet (16), qui présente des orifices de brisure (17) dans la paroi périphérique de sa forme de godet pour briser l'eau en écoulement en une multitude de jets individuels, et **en ce que** le diffuseur (16) comporte à sa périphérie intérieure côté amont un logement de support, sur lequel le support (13) est appliqué.

2. Élément de sortie selon la revendication 1, **caractérisé en ce que** le régulateur de débit (4) comporte un élément d'étranglement annulaire (7) en matériau élastique, qui est disposé dans une rainure annulaire (8) dans le boîtier de régulateur (5) et entoure un coeur de boîtier (10), **en ce qu'**au moins une des parois périphériques limitant la rainure annulaire (8) porte un profilage de réglage (11), et **en ce que** le boîtier de régulateur (5) présente dans la région du fond de rainure au moins un orifice d'écoulement (15).

3. Élément de sortie selon la revendication 2, **caractérisé en ce que** l'élément d'étranglement (7) limite entre lui-même et ladite au moins une paroi périphérique portant le profilage de réglage (11) une fente de commande ou annulaire (12), et **en ce que** le corps d'étranglement (7) se moule dans le profilage de réglage (11), lorsque la pression de l'eau en écoulement augmente, de telle manière que la fente annulaire (12) se rétrécisse de plus en plus.

4. Élément de sortie selon la revendication 2 ou 3, **caractérisé en ce que** ledit au moins un orifice d'écoulement (15) du régulateur de débit (4) débouche dans la position fermée dans l'ouverture de support (14).

5. Élément de sortie selon l'une quelconque des revendications 1 à 4, **caractérisé en ce qu'**il est prévu au moins un joint d'étanchéité annulaire entre le boîtier de limiteur ou de régulateur (5) et le support (13).

6. Élément de sortie selon la revendication 5, **caractérisé en ce que** ledit au moins un joint d'étanchéité annulaire est formé en une seule pièce sur le boîtier de limiteur ou de régulateur (5) ou sur la région de bord du support (13) entourant l'ouverture de support (14).

7. Élément de sortie selon l'une quelconque des revendications 1 à 6, **caractérisé en ce qu'**un tourillon de guidage (18), qui traverse une ouverture de guidage (19) dans le boîtier de limiteur ou de régulateur (5), est saillant sur le fond de godet du diffuseur en forme de godet (16).

8. Élément de sortie selon la revendication 7, **caractérisé en ce que** l'ouverture de guidage (19) traverse le coeur de boîtier (10) du boîtier de régulateur (5).

9. Élément de sortie selon l'une quelconque des revendications 1 à 8, **caractérisé en ce que** le support (13) est formé par un disque annulaire.

10. Élément de sortie selon l'une quelconque des revendications 7 à 9, **caractérisé en ce que** le tourillon de guidage (18) porte des bras élastiques (21, 22) à son extrémité de tourillon libre, **en ce qu'**il est prévu sur les bras élastiques (21, 22), sur le côté extérieur, des butées de glissement (23) pour le boîtier de limiteur ou de régulateur (5) et **en ce que** les bras élastiques (21, 22) peuvent être inclinés ou infléchis l'un vers l'autre contre leur élasticité propre d'une position fonctionnelle à une position libératoire.

11. Élément de sortie selon l'une quelconque des revendications 1 à 10, **caractérisé en ce que** l'élément de sortie (1) comporte un tamis d'entrée ou de filtre (24), **en ce que** le tamis d'entrée ou de filtre (24) peut être fixé, de préférence de manière amovible, au boîtier d'insertion (2), et **en ce que** le régulateur de débit (4) ou le limiteur de débit est disposé et guidé de façon coulissante dans le boîtier d'insertion (2) entre le brise-jet (16) et le tamis d'entrée ou de filtre (24).

12. Élément de sortie selon la revendication 11, **caractérisé en ce qu'**il est prévu sur le tamis d'entrée ou de filtre (24) un tourillon de fixation (25) qui, lorsque le tamis d'entrée ou de filtre (24) est calé sur le boîtier d'insertion (2), est saillant dans un espace libre restant entre les bras élastiques (21, 22), de telle manière que les bras élastiques (21, 22) soient fixés dans leur position fonctionnelle.

13. Élément de sortie selon l'une quelconque des revendications 1 à 12, **caractérisé en ce que** ledit au moins un élément de rappel (6) est un ressort de rappel ou de pression.

14. Élément de sortie selon l'une quelconque des revendications 7 à 13, **caractérisé en ce qu'**il est prévu entre le fond de godet du diffuseur (16) et le boîtier de régulateur (5) un anneau d'amortissement (26), dont l'ouverture annulaire traverse le tourillon de guidage (18) et **en ce que** l'anneau d'amortissement (26) limite la course du boîtier de limiteur ou de régulateur (5) en direction du brise-jet (16).

15. Élément de sortie selon l'une quelconque des revendications 1 à 14, **caractérisé en ce que** le logement de support est réalisé sous la forme d'un épaulement annulaire (20).
